# FASCICULE DE BREVET EUROPEEN

(11) **EP 4 259 906 B1**
(45) Date de publication et mention de la délivrance du brevet: **09.10.2024**
(21) Numéro de dépôt: 21840082.8
(22) Date de dépôt: 03.12.2021
(51) Int. Cl.: F01D 11/00

(54) **ENSEMBLE STATORIQUE DE TURBINE AVEC DEGRÉ DE LIBERTÉ RADIAL ENTRE UN DISTRIBUTEUR ET UN ANNEAU D'ÉTANCHÉITÉ**
TURBINENSTATORBAUGRUPPE MIT RADIALEM FREIHEITSGRAD ZWISCHEN EINEM VERTEILER UND EINEM DICHTRING
TURBINE STATOR ASSEMBLY WITH RADIAL DEGREE OF FREEDOM BETWEEN A DISTRIBUTOR AND A SEAL RING

(30) Priorité: 09.12.2020 FR 2012891
(43) Date de publication de la demande: 18.10.2023
(73) Titulaire: SAFRAN AIRCRAFT ENGINES, 75015 Paris (FR)
(72) Inventeur: SULTANA, Patrick, Jean, Laurent, 77550 MOISSY-CRAMAYEL (FR); GOT, Marc-Antoine, Anatole, 77550 MOISSY-CRAMAYEL (FR); ZAMAI, Laurent, Cédric, 77550 MOISSY-CRAMAYEL (FR)
(74) Mandataire: Brevalex
(86) Numéro de dépôt international: PCT/FR2021/052203
(87) Numéro de publication internationale: WO 2022/123157

(56) Documents cités:
- EP-A1- 2 594 743
- EP-A1- 3 690 192
- WO-A1-2020/233947
- FR-A1- 3 027 343
- FR-A1- 3 085 708
- US-B1- 6 695 314

## Description

### Domaine technique

L'invention se rapporte au domaine des turbines à gaz de combustion pour turbomachine d'ensemble propulsif d'aéronef.

L'invention peut notamment être mise en oeuvre au sein d'une turbine basse pression de turboréacteur.

### État de la technique antérieure

Une turbine de turboréacteur conventionnelle comprend un ou plusieurs étages axiaux disposés en série qui permettent de convertir de l'énergie de combustion en énergie motrice, afin notamment d'entraîner un rotor de compresseur(s) et un arbre de soufflante.

Pour ce faire, chaque étage de la turbine comprend un distributeur formant un stator et une roue mobile formant un rotor. Le distributeur comprend des aubes fixes configurées pour accélérer et dévier un écoulement de gaz de combustion en direction d'aubes mobiles portées par un disque de la roue mobile.

Il est connu de disposer un joint d'étanchéité dynamique radialement à l'intérieur du distributeur afin de réduire la circulation des gaz en-dehors du conduit annulaire primaire dans lequel s'étendent les aubes fixes et mobiles. Un tel joint comprend un élément abradable solidaire du distributeur et une ou plusieurs léchettes solidaires du rotor.

Lors du fonctionnement du turboréacteur, le distributeur est exposé à des températures plus élevées que le disque de la roue mobile et l'inertie thermique du distributeur est généralement plus faible que celle du disque, ce qui entraîne une variation du jeu entre l'élément abradable et les léchettes.

Il en résulte une augmentation du débit de fuite lorsque le jeu précité augmente et une accélération de l'usure de l'élément abradable lorsque ce jeu diminue.

Le document FR 3 027 343 A1 divulgue une solution de montage autorisant un déplacement radial entre l'élément abradable et le distributeur, mais l'étanchéité d'un tel montage n'est pas satisfaisante. Ensembles statoriques de turbine sont aussi connus par les EP 2 594 743 A1 et WO 2020/233947 A1.

### Exposé de l'invention

Un but de l'invention est d'améliorer l'étanchéité au sein d'une turbine de turbomachine, notamment au sein d'une turbine basse pression.

A cet effet, l'invention a pour objet un ensemble statorique de turbine s'étendant autour d'un axe et comprenant :
- un anneau d'étanchéité s'étendant autour de l'axe et comprenant un élément abradable destiné à coopérer avec des léchettes d'étanchéité portées par un rotor monté rotatif autour de l'axe,
- une pluralité de secteurs de couronne disposés circonférentiellement bout à bout autour de l'axe de sorte à former ensemble une couronne, chaque secteur de couronne étant aubagé,
- des moyens de coulissement permettant un déplacement relatif radialement vis-à-vis de l'axe entre l'anneau d'étanchéité et chacun des secteurs de couronne, les moyens de coulissement étant disposés au niveau d'une extrémité radialement interne de la couronne formée par la pluralité de secteurs de couronne.

Selon l'invention, cet ensemble comprend des moyens d'étanchéité situés radialement à l'extérieur des moyens de coulissement de manière à réduire des fuites provenant d'espaces circonférentiels situés entre les secteurs de couronne circonférentiellement adjacents.

L'invention permet ainsi de découpler radialement les secteurs de couronne et l'anneau de support l'un de l'autre tout en assurant une étanchéité satisfaisante.

Le découplage radial de l'anneau d'étanchéité et du distributeur formé par les secteurs de couronne permet de réduire voire d'annuler la variation de jeu radial entre l'élément abradable et la ou les léchettes qui coopèrent avec cet élément abradable, cela dans toutes les phases de fonctionnement de la turbomachine, notamment en régime transitoire.

Dans un mode de réalisation, les moyens d'étanchéité comprennent un joint à brosse axialement en appui d'une part sur les secteurs de couronne et d'autre part sur l'anneau d'étanchéité ou sur une pièce solidaire de l'anneau d'étanchéité.

Un tel joint permet de compenser efficacement des désalignements des secteurs de couronne les uns par rapport aux autres et de recouvrir les espaces circonférentiels entre secteurs de couronne adjacents.

Un tel joint permet aussi de réduire les fuites susceptibles de se produire au travers des jeux radiaux entre l'anneau d'étanchéité et les secteurs de couronne.

Il en résulte une amélioration de l'étanchéité qui permet notamment d'augmenter la précision du débit de fuite éventuellement souhaité, par exemple par l'intermédiaire de trous ou passages calibrés réalisés dans l'anneau.

Dans un mode de réalisation, chacun des secteurs de couronne comprend, sur une face d'extrémité circonférentielle, une ou plusieurs rainures, les moyens d'étanchéité comprenant des plaquettes d'étanchéité qui sont chacune logées à la fois dans une des rainures de l'un des secteurs de couronne et une autre des rainures d'un autre secteur de couronne circonférentiellement adjacent de manière à s'étendre à travers l'espace circonférentiel situé entre ces deux secteurs de couronne circonférentiellement adjacents.

De telles plaquettes d'étanchéité permettent d'améliorer encore davantage l'étanchéité au sein de la turbine.

Dans un mode de réalisation, les moyens de coulissement comprennent des pions portés par l'un parmi l'anneau d'étanchéité et la pluralité de secteurs de couronne, l'autre parmi l'anneau d'étanchéité et la pluralité de secteurs de couronne comprenant des ouvertures oblongues traversées chacune par l'un respectif des pions.

De préférence, les ouvertures oblongues sont formées par les secteurs de couronne de manière à déboucher radialement vers l'intérieur de ces secteurs de couronne.

Un tel débouchement des ouvertures oblongues autorise un montage des secteurs de couronne, après assemblage des pions avec l'anneau d'étanchéité, par déplacement des secteurs de couronne radialement vers l'intérieur par rapport à l'anneau d'étanchéité de manière à introduire les pions dans les ouvertures oblongues correspondantes.

Il en résulte une simplification d'assemblage.

Dans un mode de réalisation, l'anneau d'étanchéité comprend une bride amont et une bride aval et chacun des secteurs de couronne comprend une bride s'étendant axialement entre la bride amont et la bride aval de l'anneau d'étanchéité.

Un tel agencement de brides améliore le positionnement axial des secteurs de couronne par rapport à l'anneau d'étanchéité et le maintien de l'alignement de ces secteurs de couronne les uns par rapport aux autres.

Cela permet aussi d'assurer le guidage de l'anneau d'étanchéité lorsque celui-ci, par exemple sous l'effet de sa dilatation, se déplace radialement par rapport aux secteurs de couronne.

De préférence, la bride de chacun des secteurs de couronne est reliée aux brides amont et aval de l'anneau d'étanchéité par l'intermédiaire de l'un au moins desdits pions.

Dans un mode de réalisation, la bride de chacun des secteurs de couronne comporte une ou plusieurs desdites ouvertures oblongues.

Dans un mode de réalisation, la bride amont et la bride aval de l'anneau d'étanchéité comprennent chacun au moins un orifice recevant respectivement une partie amont et une partie aval de l'un respectif desdits pions, chaque pion comprenant une partie intermédiaire s'étendant à travers l'une respective des ouvertures oblongues, la partie amont et la partie aval de chaque pion présentant chacune un diamètre supérieur au diamètre de sa partie intermédiaire.

Une telle géométrie des pions permet notamment d'éviter leur perte en cas de désolidarisation accidentelle.

De préférence, les pions sont montés par frettage dans l'anneau. A cet effet, le diamètre des orifices des brides amont et aval de l'anneau d'étanchéité et le diamètre des parties amont et aval des pions, respectivement, sont choisis de manière à former un ajustement serré.

Le montage des pions par frettage permet à la fois de les maintenir en position et de contribuer à l'étanchéité de l'assemblage.

L'invention concerne aussi une turbine comprenant un carter et un ensemble statorique tel que défini ci-dessus porté par le carter, notamment une turbine basse pression.

Dans un mode de réalisation, la turbine comprend un rotor pourvu de léchettes d'étanchéité configurées pour coopérer avec l'élément abradable de l'ensemble statorique.

L'invention couvre aussi une turbomachine comprenant une telle turbine et/ou un tel ensemble statorique, ainsi qu'un ensemble propulsif d'aéronef comprenant une telle turbomachine.

Selon un autre aspect, l'invention se rapporte à un procédé d'assemblage d'un ensemble statorique tel que défini ci-dessus.

D'autres avantages et caractéristiques de l'invention apparaîtront à la lecture de la description détaillée, non limitative, qui suit.

### Brève description des dessins

La description détaillée qui suit fait référence aux dessins annexés sur lesquels :
[Fig. 1] est une vue schématique en coupe axiale d'un ensemble propulsif d'aéronef ;
[Fig. 2] est une demi-vue schématique partielle en coupe axiale d'une turbine basse-pression de turbomachine ;
[Fig. 3] est une vue schématique en perspective d'un secteur de distributeur de la turbine de la figure 2 ;
[Fig. 4] est une vue schématique en perspective d'un tronçon d'anneau formant un support pour un élément abradable d'un joint d'étanchéité dynamique de la turbine de la figure 2 ;
[Fig. 5] est une vue schématique en perspective d'un tronçon d'élément abradable annulaire dudit joint d'étanchéité dynamique de la turbine de la figure 2 ;
[Fig. 6] est une vue schématique en perspective d'une partie de l'anneau de la figure 4, montrant des orifices de réception d'un pion ;
[Fig. 7] est une vue schématique en perspective d'un pion prévu pour assurer une coopération du secteur de couronne de la figure 3 avec l'anneau de la figure 4 ;
[Fig. 8] est une vue schématique en perspective d'une partie de la turbine de la figure 2.

### Description détaillée de modes de réalisation

Les figures comprennent un référentiel L, R et C définissant respectivement des directions axiale (ou longitudinale), radiale et circonférentielle orthogonales entre elles.

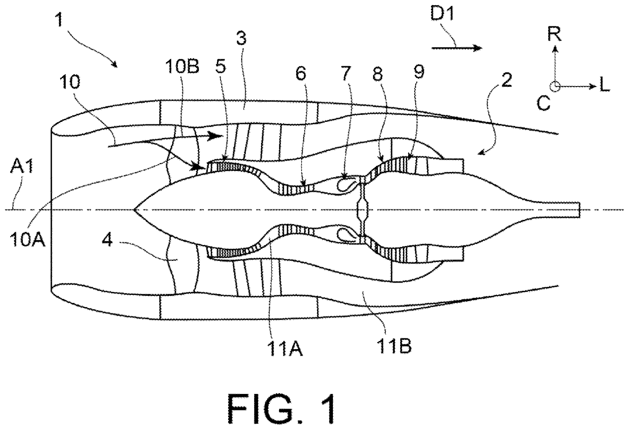

Il est représenté à la figure 1 un ensemble propulsif 1 d'aéronef comprenant une turbomachine 2 carénée par une nacelle 3. Dans cet exemple, la turbomachine 2 est un turboréacteur à double corps et à double flux.

Par la suite, les termes « amont » et « aval » sont définis par rapport à un sens D1 d'écoulement des gaz à travers l'ensemble propulsif 1 lorsque celui-ci est propulsé.

Le turboréacteur 2 présente un axe central longitudinal A1 autour duquel s'étendent ses différents composants, en l'occurrence, de l'amont vers l'aval, une soufflante 4, un compresseur basse pression 5, un compresseur haute pression 6, une chambre de combustion 7, une turbine haute pression 8 et une turbine basse pression 9. Les compresseurs 5 et 6, la chambre de combustion 7 et les turbines 8 et 9 forment un générateur de gaz.

Lors du fonctionnement du turboréacteur 2, un écoulement d'air 10 pénètre dans l'ensemble propulsif 1 par une entrée d'air en amont de la nacelle 3, traverse la soufflante 4 puis se divise en un flux primaire 10A central et un flux secondaire 10B. Le flux primaire 10A s'écoule dans une veine principale 11A de circulation des gaz traversant le générateur de gaz. Le flux secondaire 10B s'écoule quant à lui dans une veine secondaire 11B entourant le générateur de gaz et délimitée radialement vers l'extérieur par la nacelle 3.

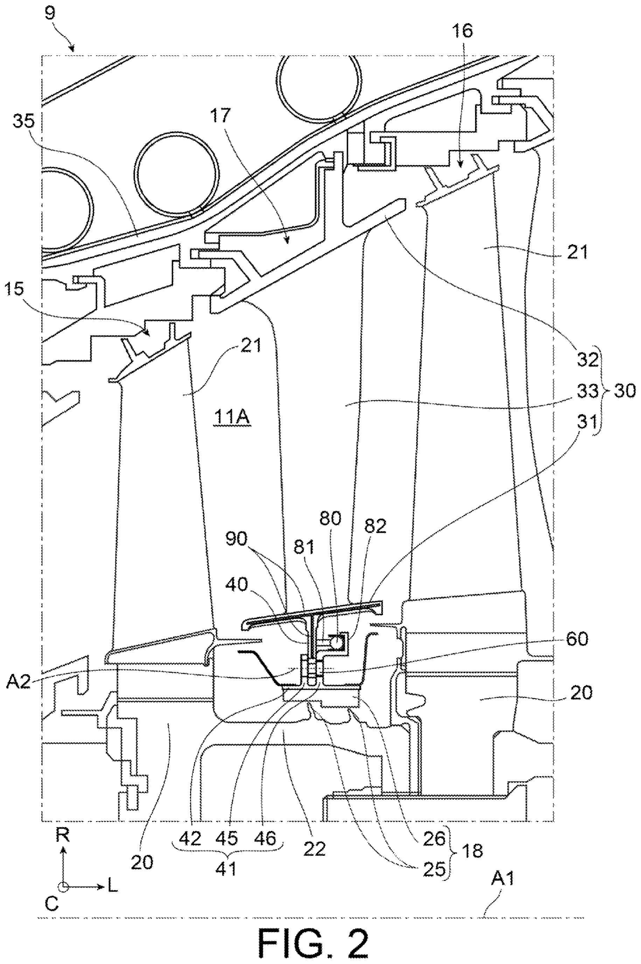

La turbine basse pression 9, partiellement représentée à la figure 2, est configurée pour récupérer une partie de l'énergie de combustion afin d'entraîner en rotation autour de l'axe A1 des roues mobiles formant le rotor de la turbine 9. Entre chaque paire de roues mobiles adjacentes, la turbine 9 comprend une couronne aubagée statorique formant un distributeur.

La figure 2 montre une partie de deux roues mobiles 15 et 16, d'un distributeur 17 et d'un joint d'étanchéité dynamique 18 de la turbine 9.

Le distributeur 17 s'étend axialement entre la roue mobile 15, qui forme une roue amont, et la roue mobile 16 qui forme une roue aval.

De manière connue en soi, chacune des roues mobiles 15 et 16 comprend un disque 20 et des aubes 21 portées par le disque 20.

Dans cet exemple, le disque 20 de la roue amont 15 comprend une virole 22 s'étendant axialement en direction de la roue aval 16, radialement à l'intérieur du distributeur 17. Une extrémité aval de la virole 22 est reliée au disque 20 de la roue aval 16 de manière à solidariser l'une avec l'autre les roues 15 et 16 en rotation autour de l'axe A1.

Le joint d'étanchéité dynamique 18 est formé d'une part par des léchettes 25 annulaires portées par la virole 22 et, d'autre part, par un élément abradable 26, ou pièce d'usure, relié au distributeur 17.

Lors du fonctionnement du turboréacteur 2, les roues mobiles 15 et 16 sont entraînées en rotation autour de l'axe A1, ce qui entraîne un frottement des léchettes 25 sur l'élément abradable 26. Le joint 18 assure ainsi une étanchéité dynamique qui réduit la circulation de gaz en dehors de la veine principale 11A, en l'occurrence radialement entre le distributeur 17 et la virole 22.

L'invention se rapporte plus spécifiquement à la liaison de l'élément abradable 26 avec le distributeur 17.

Le distributeur 17 comprend dans cet exemple plusieurs secteurs 30 disposés circonférentiellement bout à bout de manière à former ensemble une couronne aubagée.

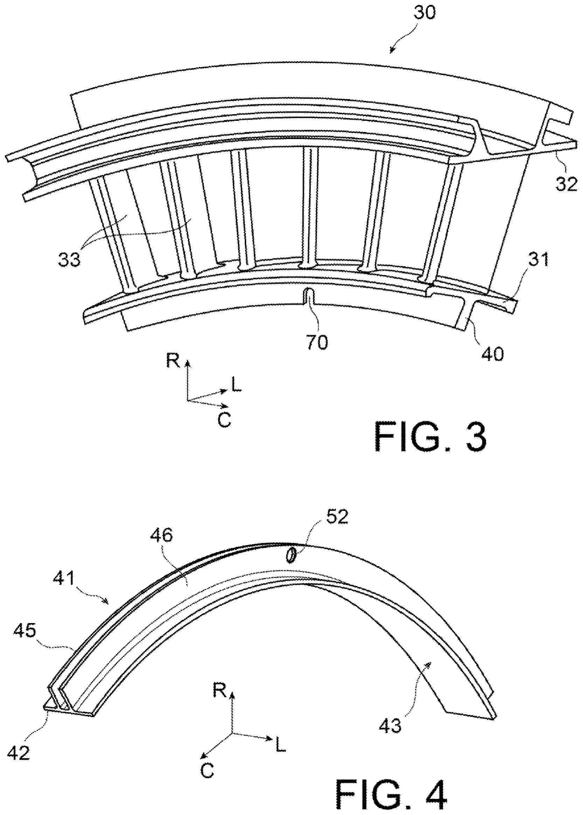

La figure 3 montre l'un de ces secteurs de couronne 30.

Dans cet exemple, tous les secteurs de couronne 30 du distributeur 17 sont identiques de sorte que la description qui suit, qui se rapporte au secteur de couronne 30 de la figure 3, s'applique à chacun des autres secteurs de couronne.

En référence aux figures 2 et 3, le secteur de couronne 30 comprend une plateforme interne 31, une plateforme externe 32 et des pales 33.

Les pales 33 sont chacune reliées d'une part à la plateforme interne 31 et d'autre part à la plateforme externe 32 de manière à s'étendre radialement à travers la veine principale 11A, laquelle est radialement délimitée par ces plateformes 31 et 32.

Les pales 33 du secteur de couronne 30 sont circonférentiellement espacées les unes des autres.

La plateforme externe 32 est configurée pour être fixée sur un carter 35 du turboréacteur 2.

Le secteur de couronne 30 comprend dans cet exemple une bride 40 reliée à la plateforme interne 31 de manière à s'étendre radialement vers l'intérieur à partir de la plateforme interne 31, en direction de la virole 22.

La bride 40 est configurée pour coopérer avec un anneau d'étanchéité 41.

La figure 4 montre un tronçon circonférentiel de l'anneau 41, étant entendu que celui-ci forme une couronne annulaire.

L'anneau 41 est dans cet exemple une pièce portant l'élément abradable 26, lequel forme également une couronne annulaire.

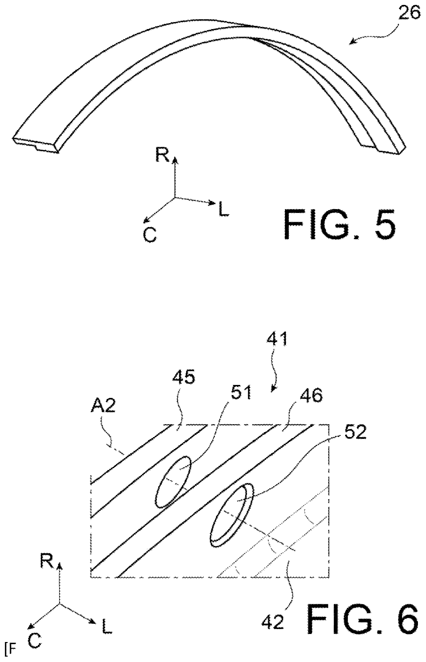

En référence aux figures 4 et 5, qui montrent respectivement un tronçon circonférentiel de l'anneau 41 et un tronçon circonférentiel correspondant de l'élément abradable 26, l'anneau 41 comprend à cet effet une plateforme 42 définissant une surface interne 43 sur laquelle est fixé l'élément abradable 26 selon la configuration de la figure 2.

L'anneau 41 comprend par ailleurs une bride amont 45 et une bride aval 46 s'étendant radialement vers l'extérieur à partir de la plateforme 42.

En référence aux figures 2, 4, 6 et 8, les brides 45 et 46 sont axialement espacées l'une de l'autre de manière à former une section en U définissant un espace dans lequel peut être insérée la bride 40 des secteurs de couronne 30.

La distance axiale entre les brides 45 et 46 est choisie de manière à permettre un positionnement axial et un maintien en position axiale adéquats du secteur de couronne 30, tout en autorisant sa mobilité par coulissement radial de la bride 40 entre les brides 45 et 46 (voir ci-dessous).

La figure 6 montre deux orifices 51 et 52 réalisés respectivement dans la bride amont 45 et la bride aval 46 de l'anneau 41.

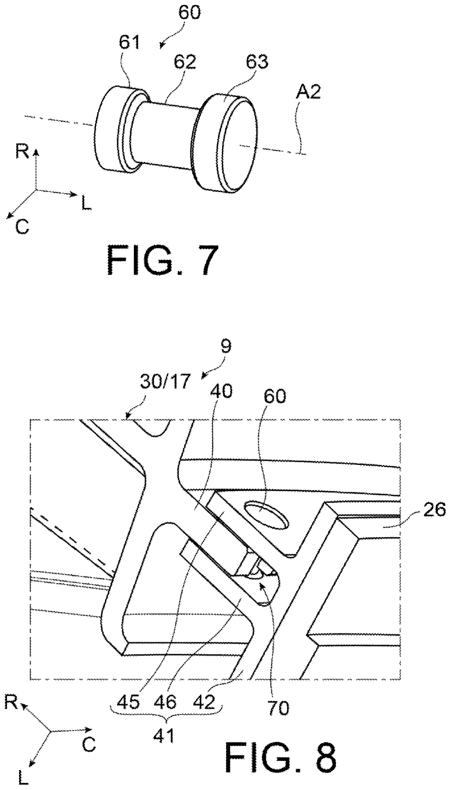

Les orifices 51 et 52 présentent un axe A2 commun et sont prévus pour recevoir un pion 60 tel que celui représenté à la figure 7.

Dans ce mode de réalisation, le pion 60 est une pièce cylindrique d'axe A2 présentant deux épaulements qui définissent une partie amont 61, une partie intermédiaire 62 et une partie aval 63.

La partie intermédiaire 62 a un diamètre inférieur au diamètre de la partie amont 61 et de la partie aval 63.

Le diamètre de la partie amont 61 est en outre inférieur à celui de la partie aval 63.

L'orifice 51 de la bride amont 45 de l'anneau 41 est dimensionné pour recevoir la partie amont 61 du pion 60 de manière à former un ajustement serré.

Similairement, l'orifice 52 de la bride aval 46 de l'anneau 41 est dimensionné pour recevoir la partie aval 63 du pion 60 de manière à former un ajustement serré.

Après assemblage, le pion 60 est ainsi porté par l'anneau 41 en formant avec celui-ci une liaison complète.

Le pion 60 est configuré pour coopérer avec le distributeur 17, en particulier avec la bride 40 du secteur de couronne 30.

En référence aux figures 3 et 8, la bride 40 comprend à cet effet une ouverture 70 qui présente une forme oblongue du type rainure s'étendant radialement.

Dans cet exemple, l'ouverture 70 débouche radialement vers l'intérieur du secteur de couronne 30.

L'ouverture 70 présente une largeur, ou dimension circonférentielle, lui permettant d'être traversée par la partie intermédiaire 62 du pion 60, c'est-à-dire une largeur supérieure au diamètre de la partie intermédiaire 62 du pion 60.

La largeur de l'ouverture 70 est par ailleurs inférieure au diamètre de la partie amont 61 et de la partie aval 63 du pion 60. Ainsi, en cas de rupture de la liaison entre le pion 60 et l'anneau 41, la bride 40 du secteur de couronne 30 forme une butée axiale de retenue du pion 60.

Par distinction avec le rotor de la turbine 9 dont les parties sont mobiles en rotation autour de l'axe A1, l'ensemble formé par l'anneau 41, l'élément abradable 26, le secteur de couronne 30 et le pion 60 appartiennent au stator de la turbine 9.

L'assemblage de cet élément statorique comprend une pré-insertion du pion 60 dans l'anneau 41 en faisant passer la partie amont 61 du pion 60 par l'orifice 52 de la bride aval 46.

Le pion 60 est ensuite fixé à l'anneau 41 par insertion forcée de sa partie amont 61 dans l'orifice 51 de la bride amont 45 et, simultanément, de sa partie aval 63 dans l'orifice 52 de la bride aval 46.

Le secteur de couronne 30 est ensuite déplacé radialement vers l'intérieur de manière à introduire la bride 40 axialement entre les brides 45 et 46 de l'anneau 41 et à insérer la partie intermédiaire 62 du pion 60 dans l'ouverture 70 de la bride 40.

Ces étapes d'assemblage permettent d'aboutir à la configuration illustrée aux figures 2 et 8.

Dans cette configuration, le pion 60 forme d'une part une butée circonférentielle pour le secteur de couronne 30, empêchant un déplacement de l'anneau 41 et du secteur de couronne 30 l'un par rapport à l'autre en rotation autour de l'axe A1 et permettant de centrer l'anneau 41 par rapport à cet axe A1.

D'autre part, compte tenu des dimensions respectives de la partie intermédiaire 62 du pion 60 et de l'ouverture oblongue 70, l'assemblage autorise un déplacement radial de l'anneau 41 par rapport au secteur de couronne 30.

Le pion 60 et l'ouverture oblongue 70 forme ainsi des moyens de coulissement.

L'ensemble statorique peut comprendre d'autres pions similaires au pion 60 coopérant chacun avec la bride 40 de l'un respectif des autres secteurs de couronne 30 selon les principes décrits ci-dessus.

Bien entendu, ces principes peuvent être généralisés. Par exemple, chacun des secteurs de couronne 30 du distributeur 17 peut coopérer avec plusieurs pions similaires au pion 60.

De manière générale, l'invention permet de relier l'un à l'autre l'anneau d'étanchéité 41 et le distributeur 17 selon une liaison définissant un degré de liberté radial apte à compenser les dilatations thermiques différentielles au sein de la turbine 9.

Le jeu radial entre les léchettes 25 et l'élément abradable 26 peut ainsi être maintenu sensiblement constant lors du fonctionnement du turboréacteur 2, ce qui améliore l'étanchéité conférée par le joint d'étanchéité dynamique 18.

Le montage forcé des pions 60 dans les orifices 51 et 52 de l'anneau 41 contribue à la réduction des fuites de gaz en-dehors de la veine principale 11A.

Le joint 80 améliore encore davantage l'étanchéité de la turbine 9.

Dans le mode de réalisation de la figure 2, le joint 80 est un joint annulaire à brosse 81 interposé entre l'anneau 41 et les secteurs de couronne 30.

Plus précisément, l'anneau d'étanchéité 41 de la figure 2 comprend une bride secondaire 82 solidaire de la bride aval 46 et s'étendant radialement entre le pion 60 et la plateforme 31 du secteur de couronne 30.

Le joint 80 est fixé à la bride secondaire 82 de sorte que la brosse 81 soit en appui sur la bride 40 des différents secteurs de couronne 30.

Les poils de la brosse 81 permettent ainsi de combler les jeux entre secteurs de couronne 30 adjacents et procure ainsi une étanchéité améliorée.

De tels moyens d'étanchéité sont compatibles avec la mise en oeuvre d'un circuit de refroidissement.

A cet égard, des passages d'air (non représentés) peuvent être formés dans l'anneau 41, par exemple dans la bride aval 46, afin de maîtriser le débit d'air de refroidissement traversant l'anneau 41.

Bien entendu, l'invention n'est pas limitée aux modes de réalisation décrits ci-dessus. Par exemple, dans un mode de réalisation non représenté, le degré de liberté radial entre l'anneau 41 et le distributeur 17 peut être obtenu par coopération entre un ou plusieurs pions solidaires du distributeur 17 et une ou plusieurs ouvertures ou rainures correspondantes réalisées dans l'anneau 41, ou encore en une combinaison d'un tel mode de coopération avec celui décrit en référence aux figures 2 à 8.

Concernant l'étanchéité, l'ensemble statorique peut comprendre des moyens d'étanchéité complémentaires et/ou différents du joint 80 de la figure 2. Par exemple, un joint (non représenté) peut être interposé entre la bride 40 du secteur de couronne 30 et une pièce solidaire de l'anneau 41 de manière à s'étendre axialement en amont de la bride 40.

Dans l'exemple de la figure 2, le secteur de couronne 30 représenté sur cette figure comprend des rainures 90 réalisées dans la bride 40 et dans la plateforme 31. Ces rainures 90 sont configurées pour recevoir une première partie de plaquettes d'étanchéité, une deuxième partie de ces plaquettes étant logée dans des rainures 90 similaires réalisées dans un secteur de couronne 30 adjacent de sorte que les plaquettes d'étanchéité s'étendent circonférentiellement entre ces secteurs de couronne 30 et obturent l'espace circonférentiel qu'ils définissent entre eux. De telles plaquettes d'étanchéité peuvent être agencées selon ce principe de manière à s'étendre circonférentiellement entre chaque paire de secteurs de couronne adjacents et améliorer ainsi l'étanchéité de l'ensemble.

## Revendications

1. Ensemble statorique de turbine (9) s'étendant autour d'un axe (A1) et comprenant :
- un anneau d'étanchéité (41) s'étendant autour de l'axe (A1) et comprenant un élément abradable (26) destiné à coopérer avec des léchettes d'étanchéité (25) portées par un rotor monté rotatif autour de l'axe (A1),
- une pluralité de secteurs de couronne (30) disposés circonférentiellement bout à bout autour de l'axe (A1) de sorte à former ensemble une couronne, chaque secteur de couronne (30) étant aubagé,
- des moyens de coulissement permettant un déplacement relatif radialement vis-à-vis de l'axe (A1) entre l'anneau d'étanchéité (41) et chacun des secteurs de couronne (30), les moyens de coulissement étant disposés au niveau d'une extrémité radialement interne de la couronne formée par la pluralité de secteurs de couronne (30),
**caractérisé en ce qu'**il comprend des moyens d'étanchéité (80) situés radialement à l'extérieur des moyens de coulissement de manière à réduire des fuites provenant d'espaces circonférentiels situés entre les secteurs de couronne (30) circonférentiellement adjacents.

2. Ensemble selon la revendication 1, dans lequel les moyens d'étanchéité comprennent un joint (80) à brosse (81) axialement en appui d'une part sur les secteurs de couronne (30) et d'autre part sur l'anneau d'étanchéité (41) ou sur une pièce (82) solidaire de l'anneau d'étanchéité (41).

3. Ensemble selon la revendication 1 ou 2, dans lequel chacun des secteurs de couronne (30) comprend, sur une face d'extrémité circonférentielle, une ou plusieurs rainures (90), les moyens d'étanchéité comprenant des plaquettes d'étanchéité qui sont chacune logées à la fois dans une des rainures (90) d'un des secteurs de couronne (30) et une autre des rainures (90) d'un autre secteur de couronne (30) circonférentiellement adjacent de manière à s'étendre à travers l'espace circonférentiel situé entre ces deux secteurs de couronne (30) circonférentiellement adjacents.

4. Ensemble selon l'une quelconque des revendications 1 à 3, dans lequel les moyens de coulissement comprennent des pions (60) portés par l'un parmi l'anneau d'étanchéité (41) et la pluralité de secteurs de couronne (30), l'autre parmi l'anneau d'étanchéité (41) et la pluralité de secteurs de couronne (30) comprenant des ouvertures oblongues (70) traversées chacune par l'un respectif des pions (60).

5. Ensemble selon l'une quelconque des revendications 1 à 4, dans lequel l'anneau d'étanchéité (41) comprend une bride amont (45) et une bride aval (46) et dans lequel chacun des secteurs de couronne (30) comprend une bride (40) s'étendant axialement entre la bride amont (45) et la bride aval (46) de l'anneau d'étanchéité (41).

6. Ensemble selon les revendications 4 et 5, dans lequel la bride (40) de chacun des secteurs de couronne (30) est reliée aux brides amont (45) et aval (46) de l'anneau d'étanchéité (41) par l'intermédiaire de l'un au moins desdits pions (60).

7. Ensemble selon les revendications 4 et 5 ou selon la revendication 6, dans lequel la bride (40) de chacun des secteurs de couronne (30) comporte une ou plusieurs desdites ouvertures oblongues (70).

8. Turbine (9) comprenant un carter et un ensemble statorique selon l'une quelconque des revendications 1 à 7 porté par le carter.

9. Turbine (9) selon la revendication 8, comprenant un rotor pourvu de léchettes d'étanchéité (25) configurées pour coopérer avec l'élément abradable (26) de l'ensemble statorique.

10. Turbomachine (2) comprenant une turbine (9) selon la revendication 8 ou 9 et/ou un ensemble statorique selon l'une quelconque des revendications 1 à 7.

## Patentansprüche

1. Turbinenstatorbaugruppe (9), die sich um eine Achse (A1) erstreckt und umfasst:
- einen Dichtring (41), der sich um die Achse (A1) erstreckt und ein abreibbares Element (26) umfasst, das dazu bestimmt ist, mit Dichtlippen (25) zusammenzuwirken, die von einem Rotor getragen werden, der um die Achse (A1) drehbar angebracht ist,
- eine Vielzahl von Kranzsektoren (30), die in Umfangsrichtung Ende an Ende um die Achse (A1) angeordnet sind, sodass sie zusammen einen Kranz bilden, wobei jeder Kranzsektor (30) beschaufelt ist,
- Gleitmittel, die eine relative Verlagerung radial gegenüber der Achse (A1) zwischen dem Dichtring (41) und jedem der Kranzsektoren (30) ermöglichen, wobei die Gleitmittel im Bereich eines radial inneren Endes des von der Vielzahl von Kranzsektoren (30) gebildeten Kranzes angeordnet sind,
**dadurch gekennzeichnet, dass** es Dichtmittel (80) umfasst, die sich radial außerhalb der Gleitmittel befinden, um Leckagen aus Umfangsräumen, die sich zwischen den in Umfangsrichtung aneinandergrenzenden Kranzsektoren (30) befinden, zu reduzieren.

2. Baugruppe nach Anspruch 1, wobei die Dichtmittel eine Dichtung (80) mit einer Bürste (81) umfassen, die axial einerseits an den Kranzsektoren (30) und andererseits am Dichtring (41) oder an einem fest mit dem Dichtring (41) verbundenen Teil (82) anliegt.

3. Baugruppe nach Anspruch 1 oder 2, wobei jeder der Kranzsektoren (30) auf einer Umfangsendseite eine oder mehrere Nuten (90) umfasst, wobei die Dichtmittel Dichtplättchen umfassen, die jeweils sowohl in einer der Nuten (90) eines der Kranzsektoren (30) als auch einer anderen der Nuten (90) eines anderen, in Umfangsrichtung angrenzenden Kranzsektors (30) untergebracht sind, um sich quer über den Umfangsraum erstrecken, der sich zwischen diesen zwei in Umfangsrichtung aneinandergrenzenden Kranzsektoren (30) befindet.

4. Baugruppe nach einem der Ansprüche 1 bis 3, wobei die Gleitmittel Zapfen (60) umfassen, die von einem von dem Dichtring (41) und der Vielzahl von Kranzsektoren (30) getragen werden, wobei der andere von dem Dichtring (41) und der Vielzahl von Kranzsektoren (30) längliche Öffnungen (70) umfasst, die jeweils von einem jeweiligen der Zapfen (60) durchquert werden.

5. Baugruppe nach einem der Ansprüche 1 bis 4, wobei der Dichtring (41) einen stromaufwärtigen Flansch (45) und einen stromabwärtigen Flansch (46) umfasst und wobei jeder der Kranzsektoren (30) einen Flansch (40) umfasst, der sich axial zwischen dem stromaufwärtigen Flansch (45) und dem stromabwärtigen Flansch (46) des Dichtrings (41) erstreckt.

6. Baugruppe nach den Ansprüchen 4 und 5, wobei der Flansch (40) jedes der Kranzsektoren (30) mittels mindestens einem der Zapfen (60) mit dem stromaufwärtigen (45) und dem stromabwärtigen (46) Flansch des Dichtrings (41) verbunden ist.

7. Baugruppe nach den Ansprüchen 4 und 5 oder nach Anspruch 6, wobei der Flansch (40) jedes der Kranzsektoren (30) eine oder mehrere der länglichen Öffnungen (70) umfasst.

8. Turbine (9), die ein Gehäuse und eine Statorbaugruppe nach einem der Ansprüche 1 bis 7 umfasst, die von dem Gehäuse getragen wird.

9. Turbine (9) nach Anspruch 8, die einen Rotor umfasst, der mit Dichtlippen (25) versehen ist, die so konfiguriert sind, dass sie mit dem abreibbaren Element (26) der Statorbaugruppe zusammenwirken.

10. Turbotriebwerk (2), das eine Turbine (9) nach Anspruch 8 oder 9 und/oder eine Statorbaugruppe nach einem der Ansprüche 1 bis 7 umfasst.

## Claims

1. A turbine stator assembly (9) extending around an axis (A1) and comprising:
- a sealing ring (41) extending around the axis (A1) and comprising an abradable element (26) intended to cooperate with sealing wipers (25) carried by a rotor rotatably mounted around the axis (A1),
- a plurality of crown sectors (30) disposed circumferentially end-to-end around the axis (A1) so as to together form a crown, each crown sector (30) being bladed,
- sliding means enabling a relative movement radially with respect to the axis (A1) between the sealing ring (41) and each of the crown sectors (30), the sliding means being disposed at a radially inner end of the crown formed by the plurality of crown sectors (30),
**characterised in that** it comprises sealing means (80) located radially outward from the sliding means so as to reduce leaks originating from circumferential spaces located between the circumferentially adjacent crown sectors (30).

2. The assembly according to claim 1, wherein the sealing means comprise a brush (81) seal (80) bearing axially on the one hand on the crown sectors (30) and on the other hand on the sealing ring (41) or on a part (82) secured to the sealing ring (41).

3. The assembly according to claim 1 or 2, wherein each of the crown sectors (30) comprises, over a circumferential end face, one or more groove(s) (90), the sealing means comprising sealing plates each of which accommodated both in one of the grooves (90) of one of the crown sectors (30) and another one of the grooves (90) of another circumferentially adjacent crown sector (30) so as to extend through the circumferential space located between these two circumferentially adjacent crown sectors (30).

4. The assembly according to any one of claims 1 to 3, wherein the sliding means comprise pins (60) carried by one amongst the sealing ring (41) and the plurality of crown sectors (30), the other one amongst the sealing ring (41) and the plurality of crown sectors (30) comprising oblong openings (70) each crossed by a respective one of the pins (60).

5. The assembly according to any one of claims 1 to 4, wherein the sealing ring (41) comprises an upstream flange (45) and a downstream flange (46) and wherein each of the crown sectors (30) comprises a flange (40) extending axially between the upstream flange (45) and the downstream flange (46) of the sealing ring (41).

6. The assembly according to claims 4 and 5, wherein the flange (40) of each of the crown sectors (30) is connected to the upstream (45) and downstream (46) flanges of the sealing ring (41) via at least one of said pins (60).

7. The assembly according to claims 4 and 5 or according to claim 6, wherein the flange (40) of each of the crown sectors (30) comprises one or more of said oblong openings (70).

8. A turbine (9) comprising a casing and a stator assembly according to any one of claims 1 to 7 carried by the casing.

9. The turbine (9) according to claim 8, comprising a rotor provided with sealing wipers (25) configured to cooperate with the abradable element (26) of the stator assembly.

10. A turbine engine (2) comprising a turbine (9) according to claim 8 or 9 and/or a stator assembly according to any one of claims 1 to 7.
